# FASCICULE DE BREVET EUROPEEN

(11) **EP 3 688 301 B1**
(45) Date de publication et mention de la délivrance du brevet: **23.03.2022**
(21) Numéro de dépôt: 18788820.1
(22) Date de dépôt: 26.09.2018
(51) Int. Cl.: F02K 9/80

(54) **DISPOSITIF AMELIORE D'ORIENTATION D'ENGINS SPATIAUX**
VERBESSERTE VORRICHTUNG ZUM AUSRICHTEN VON RAUMFAHRZEUGEN
IMPROVED DEVICE FOR ORIENTING SPACECRAFT

(30) Priorité: 26.09.2017 FR 1758912
(43) Date de publication de la demande: 05.08.2020
(73) Titulaire: ArianeGroup SAS, 78130 Les Mureaux (FR)
(72) Inventeur: LE GONIDEC, Serge, 27200 Vernon (FR)
(74) Mandataire: Cabinet Beau de Loménie
(86) Numéro de dépôt international: PCT/FR2018/052369
(87) Numéro de publication internationale: WO 2019/063939

(56) Documents cités:
- US-A1- 2006 076 540
- US-A1- 2017 218 883

## Description

### DOMAINE DE L'INVENTION

L'invention se rapporte au domaine des moteurs de fusée et de satellites, et plus particulièrement à l'orientation de la poussée de ces moteurs.

### ETAT DE LA TECHNIQUE ANTERIEURE

Actuellement, la manœuvre des moteurs de fusées et de satellites pour l'orientation de la poussée est assurée par des vérins qui peuvent être hydrauliques ou électriques. Ces vérins présentent cependant l'inconvénient de comporter un nombre relativement important d'éléments de type bielles, manivelles, comprenant des rotules ou autres articulations, et permettant la transformation de rotation en translation, ou inversement. Ce nombre important d'éléments engendre un risque accru de défaillances, nécessitant la présence de redondances afin de pallier ces éventuelles défaillances et d'améliorer ainsi la fiabilité de ces systèmes. Les surcoûts peuvent être par conséquent importants. Il existe donc un besoin pour un dispositif d'orientation de moteurs de fusées et de satellites permettant de limiter les inconvénients mentionnés ci-dessus. US 2017/218883 A1 et US 2006/076540 A1 décrivent d'autres exemples de dispositifs d'actionnement.

### PRESENTATION DE L'INVENTION

Le présent exposé concerne un ensemble pour engin spatial comportant :
- un support configuré pour être fixé à un engin spatial,
- un propulseur reposant sur le support,
- un dispositif d'orientation comportant au moins un actionneur apte à modifier l'orientation du propulseur, l'actionneur comprenant au moins deux électrodes et au moins un polymère électro-actif disposé entre les au moins deux électrodes.

Dans le présent exposé, l'engin spatial peut être une fusée ou un satellite.

Dans certains modes de réalisation, le propulseur est de type chimique, comportant :
- une chambre de combustion portée par le support,
- un divergent fixé à la chambre de combustion en aval de la chambre de combustion.

Dans le présent exposé, les termes « amont » et « aval » s'entendent par rapport au sens d'éjection des gaz à l'extérieur du divergent, autrement dit au sens opposé à celui de la poussée du moteur.

De ce point de vue, la chambre de combustion est disposée en aval du support, en étant portée par celui-ci, et le divergent est lui-même fixé à la chambre de combustion, en aval de celle-ci.

On entend par « disposé entre » que les électrodes sont disposées de part et d'autre du polymère électro-actif, en étant en contact avec celui-ci. Le polymère électro-actif est donc pris en sandwich entre deux électrodes, ces dernières pouvant être des plaques métalliques dont la forme correspond à celle du polymère électro-actif. Ainsi, lorsque les électrodes sont soumises à une différence de potentiel électrique, un champ électrique traverse le polymère électro-actif, provoquant la déformation de celui-ci.

Par ailleurs, le support est un élément appartenant au corps de l'engin spatial, en étant fixé à celui-ci de manière à être immobile par rapport à celui-ci, c'est-à-dire à être solidaire en déplacement avec celui-ci. De même, le divergent est fixé à la chambre de combustion de manière à être immobile par rapport à celle-ci. Par conséquent, la chambre de combustion et le divergent peuvent changer d'orientation en un seul bloc par rapport au support, et donc par rapport à l'engin spatial. Le ou les actionneur(s) permet(tent) cette modification simultanée de l'orientation de la chambre de combustion et du divergent. De manière alternative, la chambre de combustion peut être fixée à l'engin spatial de manière à être immobile par rapport à celui-ci, la modification de l'orientation s'effectuant uniquement sur le divergent.

Ces actionneurs comprennent au moins un polymère électro-actif. On entend par polymère électro-actifs des polymères dont au moins une dimension change lorsqu'ils sont stimulés par un champ électrique. Dans le présent exposé, les polymères électro-actifs peuvent être des blocs dont l'épaisseur est considérée suivant la direction amontaval, et pouvant prendre une forme parallélépipédique, cylindrique, ou toute autre forme.

L'utilisation de ces polymères électro-actifs pour l'orientation de l'engin spatial permet de limiter le recours aux dispositifs usuels tels que des vérins hydrauliques ou électriques. En limitant ainsi le nombre d'éléments nécessaires pour orienter la poussée du moteur, il est possible de réduire le risque de défaillance du système, et donc d'améliorer la fiabilité de celui-ci, tout en limitant les coûts.

Dans certains modes de réalisation, le propulseur est de type électrique.

Dans certains modes de réalisation, le dispositif d'orientation comporte au moins deux actionneurs intercalés entre le support et le propulseur.

On entend par « intercalé entre » que les actionneurs sont disposés entre le support et le propulseur, de manière à être liés, directement ou indirectement, audit support et audit propulseur. Plus précisément, lorsque les actionneurs comportent chacun un bloc de polymère électro-actif et deux électrodes, l'une des deux électrodes est liée au support, et l'autre des deux électrodes est liée au propulseur. Ainsi, lorsqu'un champ électrique parcourt le bloc de polymère électro-actif entre les deux électrodes, la déformation du bloc de polymère électro-actif, notamment l'augmentation de son épaisseur, provoque un mouvement du propulseur. En effet, une des extrémités de l'actionneur étant fixée au support, donc à l'engin spatial, la force engendrée par la déformation du bloc de polymère électro-actif est transmise au propulseur, provoquant le déplacement par rotation de celui-ci.

Dans certains modes de réalisation, les actionneurs sont alimentés électriquement indépendamment les uns des autres.

Ainsi, selon que l'un ou l'autre des actionneurs est activé, en alimentant ses électrodes en électricité, le divergent peut être orienté dans différentes directions.

Dans certains modes de réalisation, le dispositif d'orientation comporte quatre actionneurs.

Puisque les quatre actionneurs, intercalés entre le support et le propulseur, peuvent être actionnés indépendamment les uns des autres, il est ainsi possible de régler précisément l'orientation du divergent. Par exemple, un seul actionneur peut être activé, les autres n'étant pas activés, ou deux ou trois, voire les quatre actionneurs peuvent être activés simultanément.

Dans certains modes de réalisation, l'intensité du champ électrique appliqué aux actionneurs est modulable. Ainsi, l'amplitude de déformation des blocs de polymère électro-actif est fonction de l'intensité du champ électrique. Il est ainsi possible d'ajuster plus précisément encore l'orientation du divergent en ajustant la déformation, et donc l'épaisseur de chaque bloc de polymère électro-actif.

Dans certains modes de réalisation, le dispositif d'orientation comporte un bras d'orientation, l'actionneur étant fixé à une structure rigide et étant configuré pour modifier l'orientation du propulseur par l'intermédiaire du bras d'orientation.

On entend par « structure rigide » un élément lié à l'engin spatial, fixé et immobile par rapport à celui-ci. La structure rigide peut être le support. Le bras d'orientation peut être fixé à l'actionneur et à la chambre de combustion, ou à l'actionneur et au divergent. Ainsi, lorsque l'actionneur est activé, la déformation du bloc de polymère électro-actif provoque le déplacement de la chambre de combustion et du divergent, par l'intermédiaire du bras d'orientation. Un tel dispositif permet de simplifier l'assemblage de l'ensemble, en s'affranchissant de la nécessité d'intercaler des actionneurs entre le support et le propulseur.

Dans certains modes de réalisation, le bras d'orientation est un premier bras d'orientation, le dispositif d'orientation comportant un deuxième bras d'orientation, le premier et le deuxième bras d'orientation étant articulés entre eux, l'actionneur étant configuré pour modifier l'orientation du propulseur par l'intermédiaire des premier et deuxième bras d'orientation.

Un premier bras d'orientation est fixé à l'actionneur. Un deuxième bras d'orientation est fixé soit à la chambre de combustion, soit au divergent. Ainsi, lorsque l'actionneur est activé, la déformation du bloc de polymère électro-actif provoque le déplacement de la chambre de combustion et du divergent, par l'intermédiaire des premier et deuxième bras d'orientation. Un tel dispositif permet de simplifier l'assemblage de l'ensemble, en s'affranchissant de la nécessité d'intercaler des actionneurs entre le support et le propulseur. L'utilisation de deux bras d'orientation articulés l'un par rapport à l'autre permet en outre d'amplifier les déplacements engendrés par la déformation du bloc de polymère électro-actif.

Dans certains modes de réalisation, le dispositif d'orientation comporte au moins deux actionneurs en série sur la structure rigide, un des actionneurs étant fixé à la structure rigide.

On entend par « actionneurs en série » que les actionneurs sont empilés les uns sur les autres, l'un des actionneurs étant porté par la structure rigide, les autres actionneurs étant portés chacun par un autre actionneur. Suivant cette configuration, lorsque plusieurs actionneurs sont actionnés simultanément, il est possible de générer des déformations, et donc des déplacements importants du divergent. Le bras d'orientation est un bras rigide dont l'une des extrémités est connectée à un actionneur, l'autre extrémité pouvant être fixée à la chambre de combustion ou au divergent. De préférence, l'extrémité du bras d'orientation est fixée proche de l'extrémité du divergent, en aval de celui-ci. Cela permet de minimiser les efforts nécessaires engendrés par la déformation de chaque bloc de polymère électro-actif. En outre, l'utilisation d'actionneurs en série permet d'engendrer des déplacements importants sans recourir à des bras articulés entre eux.

Dans certains modes de réalisation, le dispositif d'orientation comporte au moins deux actionneurs en parallèle sur la structure rigide, les au moins deux actionneurs étant fixés sur la structure rigide.

On entend par « actionneurs en parallèle » que les actionneurs sont fixés sur la structure rigide les uns à côté des autres. Les efforts engendrés peuvent ainsi être multipliés par le nombre d'actionneurs présents en parallèle. Pour ce faire, une extrémité du bras rigide d'orientation est fixée à un élément rigide, lui-même porté par les actionneurs en parallèle. L'actionnement de ces derniers provoque ainsi le déplacement de l'élément rigide, et donc celui du bras d'orientation. Les efforts générés étant importants, l'autre extrémité du bras peut ainsi être fixée directement à la chambre de combustion.

Dans certains modes de réalisation, une extrémité du bras d'orientation est fixée au divergent.

Dans certains modes de réalisation, l'ensemble est configuré pour être utilisé sur des engins spatiaux de poussée comprise entre 0,001 N et 500 N.

Le présent exposé concerne également une fusée comportant un ensemble selon l'un quelconque des modes de réalisation précédents.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- les figure 1A et 1B représentent une vue schématique d'un ensemble selon un premier mode de réalisation ;
- la figure 2A représente l'ensemble de la figure 1 lorsqu'un actionneur est activé, et la figure 2B représente un état activé et un état désactivé d'un polymère électro-actif ;
- les figures 3A, 3B, 3C représentent schématiquement différentes configurations d'actionneurs comprenant des polymères électro-actifs ;
- les figures 4A, 4B et 4C représentent respectivement un ensemble selon un deuxième, un troisième et un quatrième mode de réalisation ;
- la figure 5 représente une vue en perspective d'un dispositif d'amortissement.

### DESCRIPTION DETAILLEE D'EXEMPLES DE REALISATION

Dans la suite de l'exposé, toutes références à une « fusée » ou à un « moteur de fusée » est également applicable à un satellite. De plus, la suite de l'exposé fait référence à un propulseur de type chimique, comportant une chambre de combustion et un divergent. Néanmoins, le dispositif d'orientation objet du présent exposé est également applicable à un propulseur de type électrique, par exemple plasmique ou ionique. Dans ce cas, la chambre d'ionisation correspond à la chambre de combustion, et les deux grilles chargées négativement et positivement à l'extrémité de la chambre d'ionisation, correspondent au divergent.

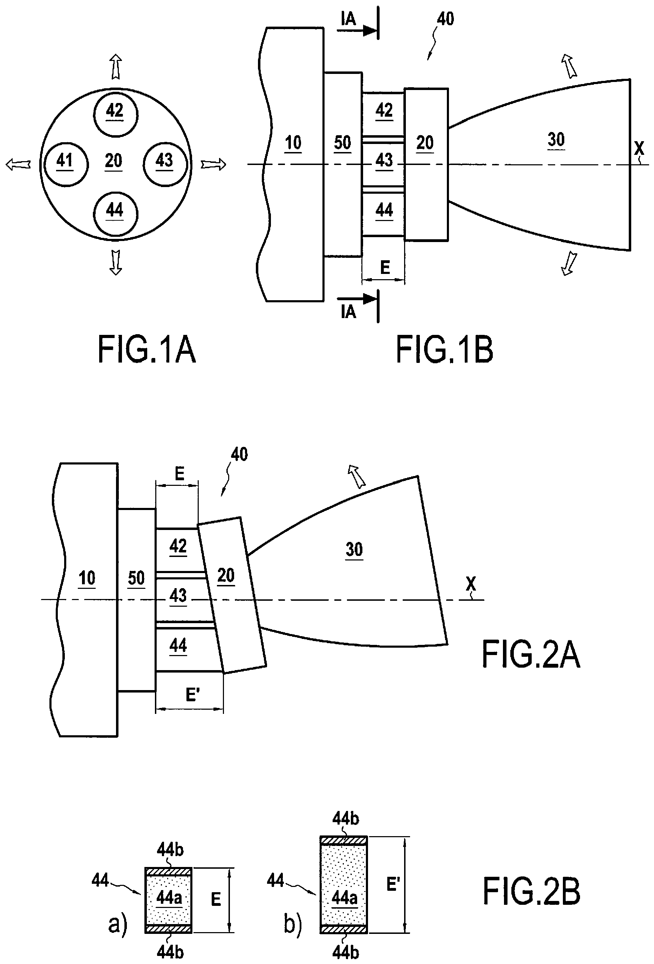

Un ensemble selon un premier mode de réalisation va être décrit en référence aux figures 1A, 1B, 2A et 2B. L'ensemble comporte un support 10 rigide appartenant au corps de la fusée (non représentée), solidaire de celle-ci et immobile par rapport à celle-ci, et un moteur de fusée comportant une chambre de combustion 20, et un divergent 30 fixé à la chambre de combustion 20. Le support 10 rigide peut être fixé à un lanceur spatial ou un satellite. Le moteur de la fusée repose sur le support 10 mais est mobile par rapport au support 10, en étant articulé par rapport au support 10, par des liaisons pivots ou des rotules, par exemple, ou tout autre moyen d'articulation. L'orientation du moteur par rapport à la fusée peut ainsi être modifiée. Il est ainsi possible de faire varier l'orientation de la poussée du moteur, et donc de modifier la trajectoire de la fusée. L'orientation de la poussée est déterminée par l'angle formé entre l'axe de révolution du divergent et l'axe X, correspondant à l'axe principal. Ainsi, un angle nul correspond à une trajectoire rectiligne, pour laquelle l'angle entre l'axe de révolution du divergent et l'axe X est nul (cf. fig. 1B).

L'ensemble comporte en outre un dispositif d'orientation 40 permettant de modifier l'orientation du moteur. Dans l'exemple de la figure 1B, le dispositif d'orientation 40 est intercalé entre le support 10 rigide et la chambre de combustion 20, en étant pris en sandwich entre le support 10 rigide et la chambre de combustion 20. Le dispositif d'orientation 40 comporte quatre actionneurs 41, 42, 43, 44. Les actionneurs comprennent des électrodes et des blocs de polymère électro-actif, disposés chacun entre deux électrodes. Les électrodes 44b de l'actionneur 44, par exemple, peuvent être des plaques métalliques prenant deux à deux en sandwich un bloc de polymère électro-actif 44a. La forme de ce dernier peut varier lorsqu'il est soumis à un champ électrique généré entre les deux électrodes 44b entre lesquelles il se trouve.

Plus précisément, supposons que chaque actionneur ait une épaisseur initiale E, l'épaisseur étant considérée suivant la direction de l'axe X lorsque l'actionneur 44 est intercalé entre le support 10 rigide et la chambre de combustion 20. Lorsque les blocs de polymère électro-actif de l'actionneur sont soumis à un champ électrique, chaque bloc se déforme de manière à ce que l'épaisseur totale E de l'actionneur augmente jusqu'à une épaisseur E'. La valeur de E' dépend de l'intensité du champ appliqué, et donc de la différence de potentiel appliquée entre les électrodes, ainsi que du type de polymère électro-actif. Par exemple, la vue a) sur la figure 2B illustre l'actionneur 44 à l'état non activé, dans lequel aucun courant ne traverse le bloc de polymère électro-actif 44a entre les deux électrodes 44b. L'épaisseur de l'actionneur 44 est alors E. La vue b) sur la figure 2B illustre l'actionneur 44 à l'état activé. Lorsqu'un champ électrique est appliqué entre les deux électrodes 44b, à travers le bloc 44a, ce dernier se déforme alors, son épaisseur augmentant jusqu'à une valeur E'. Ainsi, l'augmentation de l'épaisseur de l'actionneur pousse le moteur et incline ce dernier en conséquence. L'orientation est également possible, par un mécanisme analogue, si l'épaisseur de l'actionneur diminue.

Les blocs de polymère électro-actif peuvent être de type ionique (ou « Ionic EAP » en anglais). Ces polymères se basent sur une diffusion d'ions ou de molécules au sein du matériau. Les actionneurs utilisant des polymères ioniques ont généralement la même structure qu'une pile, soit deux électrodes séparées par un électrolyte. Ces polymères électro-actifs peuvent se présenter en pratique sous forme de "gel électrolyte" ou de "polymère liquide". Ce type de polymères consiste en un réseau de polymères réticulés et un fluide situé entre les chaines polymères. Les gels polymères sont des solides très souples qui peuvent présenter de grandes déformations via des phénomènes de gonflement induits par la mobilité des ions. En outre, dans ce cas, lorsque l'alimentation électrique de l'actionneur est coupée, ce dernier retrouve sa forme initiale, permettant au moteur de retrouver son orientation initiale.

De manière alternative, les blocs de polymère électro-actif peuvent être de type électronique (ou «Electronic EAP» en anglais). Ces polymères sont des "polymères solides" (généralement élastomères, c'est-à-dire à température de transition vitreuse nettement inférieure à la température d'utilisation), disposés en sandwich entre deux électrodes et activés par un champ électrique externe. Ils présentent l'avantage de forte déformation et une réponse rapide. Par contre, le champ électrique requis pour ces performances est élevé et proche du seuil de claquage diélectrique ou de décomposition de la matrice polymère. En outre, dans ce cas, lorsque l'alimentation électrique de l'actionneur est coupée, ce dernier conserve sa forme après déformation, et ne nécessite pas d'apport d'énergie supplémentaire pour maintenir cette position.

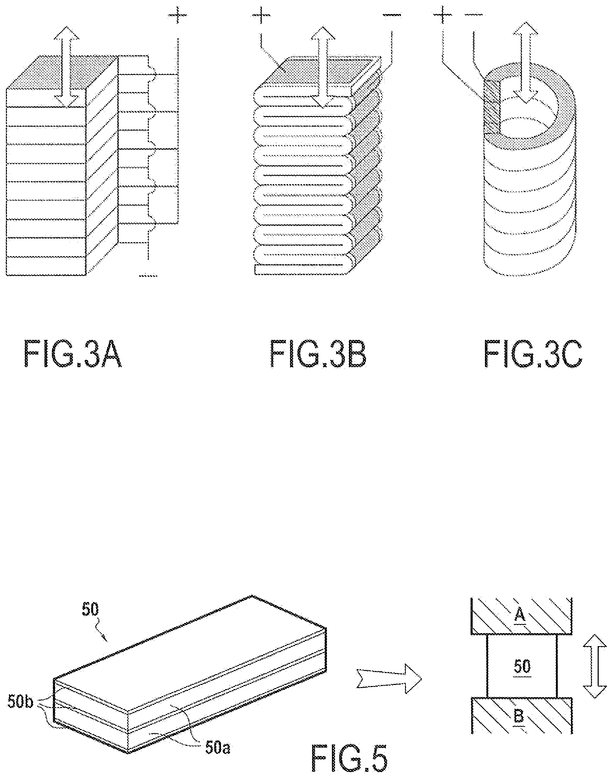

Un actionneur comporte au moins un bloc de polymère électro-actif et au moins deux électrodes, mais peut comporter une pluralité de blocs de polymère électro-actif et d'électrodes empilés les uns sur les autres. Pour ce faire, plusieurs modes d'empilement sont possibles. La figure 3A illustre une configuration multicouche, dans laquelle une pluralité de blocs de polymères électro-actifs et d'électrodes analogues à ceux de la figure 2B sont empilés successivement les uns sur les autres, chaque bloc de polymère étant intercalé entre une électrode chargée positivement et une électrode chargée négativement. La figure 3B illustre une configuration « pliée », dans laquelle un film polymère électro-actif est replié plusieurs fois sur lui-même, une électrode étant intercalée entre chaque pli. La figure 3C illustre une configuration « hélicoïdale », dans laquelle deux couches de polymère électro-actif sont enroulées en hélice. Ces types de structure permettent aux actionneurs de se déformer d'environ 15% par rapport à leur forme initiale, ces derniers pouvant fournir une contrainte d'environ 20 N/mm².

Par ailleurs, si l'on considère dans cet exemple que la section de la chambre de combustion 20 est de forme circulaire, les quatre actionneurs 41, 42, 43 et 44 sont répartis à intervalles réguliers sur la circonférence la chambre de combustion 20, de manière à être le plus éloigné possible du centre de la chambre de combustion (cf. figure 1A). L'effort à fournir pour déplacer l'ensemble du moteur et orienter ce dernier est ainsi moins important. Par ailleurs, chaque actionneur 41, 42, 43 et 44 peut être alimenté électriquement indépendamment des autres. Ainsi, en alimentant électriquement un ou plusieurs actionneurs, et en ajustant la tension dans chacun d'eux, il est possible de régler précisément l'orientation du moteur par rapport à la fusée.

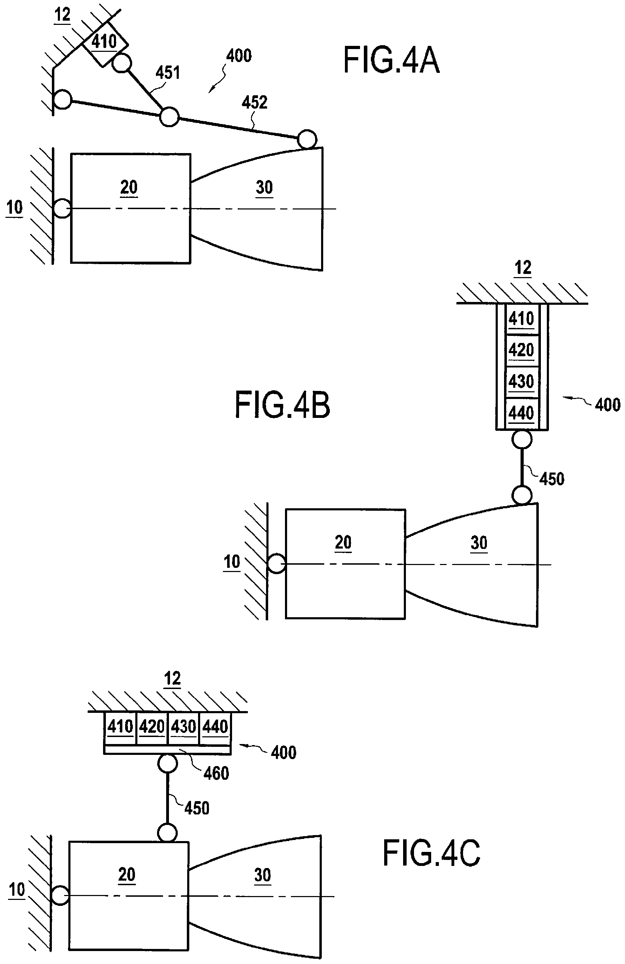

La figure 4A illustre un ensemble selon un deuxième mode de réalisation. Dans ce mode de réalisation, un dispositif d'orientation 400 comprend un actionneur 410, et deux bras d'orientation 451 et 452 articulés entre eux. L'actionneur 410, pouvant être de n'importe quel type, tel que ceux décrits précédemment, est fixé à une structure rigide 12. La structure rigide 12 est un élément fixe de la fusée ou du satellite, excentré par rapport au moteur, donc par rapport à la chambre de combustion 20 et au divergent 30. Un premier bras d'orientation 451 rigide comporte une première extrémité fixée à l'actionneur 410, et une deuxième extrémité fixée à un deuxième bras d'orientation 452 rigide. Ce dernier comporte une première extrémité fixée à la fusée, par exemple au support 10, et une deuxième extrémité fixée au divergent 30. La liaison entre cette deuxième extrémité du deuxième bras d'orientation 452 et le divergent 30 est de préférence proche de l'extrémité aval du divergent, de manière à minimiser les efforts nécessaires pour orienter ce dernier. De manière alternative, la deuxième extrémité du deuxième bras 452 peut être fixée à la chambre de combustion 20. Ainsi, lorsque l'actionneur 410 est activé, la déformation du bloc de polymère électro-actif qu'il comporte engendre un déplacement du premier bras d'orientation 451, lui-même agissant sur le deuxième bras rigide 452 par un effet levier. Le déplacement engendré par l'actionneur 410 est finalement transmis jusqu'au divergent 30 (ou tout autre structure rigide liée à la chambre de combustion), ce dernier étant ainsi orienté en conséquence, par rapport à l'axe X.

La figure 4B illustre un ensemble selon un troisième mode de réalisation. Dans ce mode de réalisation, un dispositif d'orientation 400 comprend quatre actionneurs 410, 420, 430 et 440, disposés en série, et un bras rigide 450. Plus précisément, un premier actionneur 410 est porté par la structure rigide 12, un deuxième actionneur 420 est porté par le premier actionneur, un troisième actionneur 430 est porté par le deuxième actionneur, et un quatrième actionneur 440 est porté par le troisième actionneur. Les quatre actionneurs sont ainsi empilés les uns sur les autres. Le bras rigide 450 comporte une première extrémité fixée au quatrième actionneur 440, et une deuxième extrémité fixée au divergent 30. La liaison entre cette deuxième extrémité du bras 450 et le divergent 30 est de préférence proche de l'extrémité aval du divergent, de manière à minimiser les efforts nécessaires pour orienter ce dernier. De manière alternative, la deuxième extrémité du bras 450 peut être fixée à la chambre de combustion 20. Ainsi, lorsqu'un ou plusieurs des actionneurs 410, 420, 430 et 440 sont activés, la déformation des blocs de polymère électro-actif qu'ils comportent engendre un déplacement du bras rigide 450, lui-même agissant sur le divergent 30. Le déplacement engendré par l'ensemble des actionneurs est ainsi transmis au divergent 30, ce dernier étant donc orienté en conséquence, par rapport à l'axe X. Dans cette configuration, le déplacement engendré peut être important.

Bien que dans cet exemple, quatre actionneurs sont représentés, des nombres différents d'actionneurs sont envisageables, par exemple trois actionneurs, cinq ou davantage.

La figure 4C illustre un ensemble selon un quatrième mode de réalisation. Dans ce mode de réalisation, un dispositif d'orientation 400 comprend quatre actionneurs 410, 420, 430 et 440, disposés en parallèle, un bras d'orientation 450 rigide et un élément rigide 460. Plus précisément, un premier actionneur 410, un deuxième actionneur 420, un troisième actionneur 430, et un quatrième actionneur 440 sont chacun porté par la structure rigide 12, et sont disposés les uns à côté des autres. L'élément rigide 460 est porté par l'ensemble des actionneurs en parallèle, et recouvre ces derniers du côté opposé de la structure rigide 12 par rapport aux actionneurs 410, 420, 430 et 440. Le bras d'orientation 450 rigide comporte une première extrémité fixée à l'élément rigide 460, et une deuxième extrémité fixée à la chambre de combustion 20. De manière alternative, la deuxième extrémité du bras 450 peut être fixée au divergent 30. Ainsi, lorsque les actionneurs 410, 420, 430 et 440 sont activés, la déformation des blocs de polymère électro-actif qu'ils comportent engendre un déplacement de l'élément rigide 460, lui-même agissant sur le bras d'orientation 450. Le déplacement engendré par l'ensemble des actionneurs est ainsi transmis à la chambre de combustion, cette dernière étant ainsi orientée en conséquence, par rapport à l'axe X. Dans cette configuration, l'effort engendré par les quatre actionneurs en parallèle peut être important.

Bien que dans cet exemple, quatre actionneurs sont représentés, des nombres différents d'actionneurs sont envisageables, par exemple trois actionneurs, cinq ou davantage.

En outre, dans l'exemple de la figure 1, relatif au premier mode de réalisation, l'ensemble comporte également un dispositif d'amortissement 50, intercalé entre le support 10 et le moteur, en étant pris en sandwich entre le support 10 rigide et la chambre de combustion 20. Bien qu'il ne soit pas illustré sur les figures 4A, 4B et 4C, le dispositif d'amortissement peut également être intercalé entre le support 10 et la chambre de combustion 20 dans les deuxième, troisième et quatrième modes de réalisation.

Dans la suite de la description relative au dispositif d'amortissement 50, nous nous référerons néanmoins à la figure 1, dans laquelle le dispositif d'amortissement 50 est intercalé entre le support 10 rigide et le dispositif d'orientation 40, et la figure 5.

Le dispositif d'amortissement 50 comporte trois plaques métalliques rigides 50b, et deux blocs de polymère électro-actif 50a, chacun des blocs de polymère électro-actif étant intercalé entre deux plaques métalliques 50b. Les plaques métalliques 50b et les blocs de polymère électro-actif 50a sont donc empilés successivement et en série les uns sur les autres. Alternativement, le dispositif d'amortissement 50 peut comporter un unique bloc de polymère électro-actif 50a intercalé entre deux plaques métalliques 50b, ou trois, ou davantage, blocs de polymère électro-actif 50a, chacun étant intercalés entre deux plaques métalliques 50b.

La forme et la raideur des blocs de polymère électro-actif 50a peut varier lorsqu'ils sont traversés par un champ électrique. Les plaques métalliques 50b agissent comme des électrodes, en étant chacune alimentée électriquement. Ainsi, lorsqu'un champ électrique est appliqué entre deux plaques métalliques 50b, celui-ci est transmis à travers le bloc de polymère électro-actif 50a disposé entre ces deux plaques 50b, ce dernier se déformant ou se raidissant donc sous l'effet de ce champ électrique.

La surface occupée par le dispositif d'amortissement 50 est telle qu'elle recouvre entièrement la surface occupée par la chambre de combustion 20. Ainsi, lorsque le dispositif d'amortissement 50 est alimenté électriquement, et que les blocs de polymère électro-actif 50a qu'il comporte se déforment, l'épaisseur du dispositif d'amortissement 50 augmente de manière à pousser de manière uniforme la chambre de combustion 20. Le dispositif d'amortissement 50 n'influe donc pas sur l'orientation du divergent 30, cette fonction étant assurée par le dispositif d'orientation 40. En revanche, les variations de l'épaisseur ou de raideur du dispositif d'amortissement 50 permettent d'accentuer l'effet d'amortissement de ce dispositif et donc d'améliorer l'absorption des vibrations engendrées par le moteur. La vue de droite de la figure 5 illustre schématiquement deux objets A et B séparé par un dispositif d'amortissement 50. Les vibrations engendrées par l'objet B, par exemple, peuvent être absorbées par le dispositif d'amortissement 50, ce dernier comportant au moins un bloc de polymère électro-actif, agissant comme un amortisseur mécanique, limitant ainsi la transmission des vibrations à l'objet A. Plus précisément, les fluctuations de l'épaisseur ou de raideur du dispositif d'amortissement 50, obtenues en régulant le niveau de la tension appliquée sur le bloc de polymère électro-actif, peuvent être engendrées de manière à être en opposition de phase avec les vibrations de l'objet B, limitant ainsi la transmission de ces vibrations à l'objet A pour le cas de fréquences faibles. Une autre possibilité est d'utiliser le polymère en tant que filtre mécanique en modifiant sa raideur. L'agencement adapté permet d'obtenir des filtres à plusieurs bandes de spectre variables.

Ainsi, en ajustant la tension alimentant le dispositif d'amortissement 50, il est possible d'adapter précisément les variations d'épaisseur ou de raideur du dispositif d'amortissement 50 en fonction de la fréquence des vibrations engendrées dans la chambre de combustion, et de limiter la transmission de ces vibrations à la structure de la fusée ou du satellite.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Notamment, davantage d'actionneurs peuvent être disposés en parallèle ou en série, avec deux bras d'orientation articulés entre eux. De plus, pour chaque mode de réalisation présenté, un nombre différent d'actionneurs peut être envisagé. En outre, les modes de réalisation sont décrits ci-dessus dans le cas d'un propulseur chimique comportant une chambre de combustion et un divergent. Néanmoins, ces exemples peuvent être transposés au cas d'un propulseur électrique de type plasmique ou ionique, en remplaçant dans la description la chambre de combustion du propulseur chimique par la chambre d'ionisation du propulseur électrique, et le divergent par les deux grilles chargées négativement et positivement. Par conséquent, la description et les dessins doivent être considérés dans un sens illustratif plutôt que restrictif.

## Revendications

1. Ensemble pour engin spatial comportant :
- un support (10) configuré pour être fixé à un engin spatial,
- un propulseur reposant sur le support (10),
- un dispositif d'orientation (40) comportant au moins un actionneur (44) apte à modifier l'orientation du propulseur, **caractérisé en ce que** l'actionneur (44) comprend au moins deux électrodes (44b) et au moins un polymère électro-actif (44a) disposé entre les au moins deux électrodes (44b).

2. Ensemble selon la revendication 1, dans lequel le propulseur est de type chimique, comportant :
- Une chambre de combustion (20) portée par le support (10),
- Un divergent (30) fixé à la chambre de combustion (20) en aval de la chambre de combustion (20).

3. Ensemble selon la revendication 1, dans lequel le propulseur est de type électrique.

4. Ensemble selon la revendication 1 ou 2, dans lequel le dispositif d'orientation (40) comporte au moins deux actionneurs (44) intercalés entre le support (10) et le propulseur.

5. Ensemble selon l'une quelconque des revendications 1 à 4, dans lequel les actionneurs sont alimentés électriquement indépendamment les uns des autres.

6. Ensemble selon l'une quelconques des revendications 1 à 5, dans lequel le dispositif d'orientation (40) comporte quatre actionneurs (41, 42, 43, 44).

7. Ensemble selon l'une quelconque des revendications 1 à 6, dans lequel le dispositif d'orientation (400) comporte un bras d'orientation (450), l'actionneur (410) étant fixé à une structure rigide (12) et étant configuré pour modifier l'orientation du propulseur par l'intermédiaire du bras d'orientation (450).

8. Ensemble selon la revendication 7, dans lequel le bras d'orientation est un premier bras d'orientation (451), le dispositif d'orientation (400) comportant un deuxième bras d'orientation (452), le premier et le deuxième bras d'orientation étant articulés entre eux, l'actionneur (400) étant configuré pour modifier l'orientation du propulseur par l'intermédiaire des premier et deuxième bras d'orientation.

9. Ensemble selon la revendication 7 ou 8, dans lequel le dispositif d'orientation (400) comporte au moins deux actionneurs (410, 420) en série sur la structure rigide (12), un des actionneurs étant fixé à la structure rigide. (12)

10. Ensemble selon la revendication 7 ou 8, dans lequel le dispositif d'orientation comporte au moins deux actionneurs (410, 420) en parallèle sur la structure rigide (12), les au moins deux actionneurs étant fixés sur la structure rigide (12).

11. Ensemble selon l'une quelconque des revendications 1 à 10, configuré pour être utilisé sur des engins spatiaux de poussée comprise entre 0,001 N et 500 N.

12. Fusée comportant un ensemble selon l'une quelconque des revendications précédentes.

## Patentansprüche

1. Einheit für ein Raumfahrzeug, umfassend:
- einen Träger (10), der dazu ausgestaltet ist, an einem Raumfahrzeug fixiert zu werden,
- einen Antrieb, der auf dem Träger (10) ruht,
- eine Ausrichtvorrichtung (40), umfassend mindestens ein Betätigungselement (44), das dazu geeignet ist, die Ausrichtung des Antriebs zu modifizieren, **dadurch gekennzeichnet, dass** das Betätigungselement (44) mindestens zwei Elektroden (44b) und mindestens ein elektroaktives Polymer (44a) umfasst, das zwischen den mindestens zwei Elektroden (44b) angeordnet ist.

2. Einheit nach Anspruch 1, wobei der Antrieb vom chemischen Typ ist, umfassend:
- eine Brennkammer (20), die von dem Träger (10) getragen wird,
- einen Mantel (30), der an der Brennkammer (20) hinter der Brennkammer (20) fixiert ist.

3. Einheit nach Anspruch 1, wobei der Antrieb vom elektrischen Typ ist.

4. Einheit nach Anspruch 1 oder 2, wobei die Ausrichtvorrichtung (40) mindestens zwei Betätigungselemente (44) umfasst, die zwischen dem Träger (10) und dem Antrieb eingeschoben sind.

5. Einheit nach einem der Ansprüche 1 bis 4, wobei die Betätigungselemente unabhängig voneinander elektrisch gespeist werden.

6. Einheit nach einem der Ansprüche 1 bis 5, wobei die Ausrichtvorrichtung (40) vier Betätigungselemente (41, 42, 43, 44) umfasst.

7. Einheit nach einem der Ansprüche 1 bis 6, wobei die Ausrichtvorrichtung (400) einen Ausrichtarm (450) umfasst, wobei das Betätigungselement (410) an einer starren Struktur (12) fixiert ist und dazu ausgestaltet ist, die Ausrichtung des Antriebs durch den Ausrichtarm (450) zu modifizieren.

8. Einheit nach Anspruch 7, wobei der Ausrichtarm ein erster Ausrichtarm (451) ist, wobei die Ausrichtvorrichtung (400) einen zweiten Ausrichtarm (452) umfasst, wobei der erste und der zweite Ausrichtarm aneinander angelenkt sind, wobei das Betätigungselement (400) dazu ausgestaltet ist, die Ausrichtung des Antriebs durch den ersten und zweiten Ausrichtarm zu modifizieren.

9. Einheit nach Anspruch 7 oder 8, wobei die Ausrichtvorrichtung (400) mindestens zwei Betätigungselemente (410, 420) in Reihe auf der starren Struktur (12) umfasst, wobei eines der Betätigungselemente an der starren Struktur (12) fixiert ist.

10. Einheit nach Anspruch 7 oder 8, wobei die Ausrichtvorrichtung mindestens zwei Betätigungselemente (410, 420) parallel auf der starren Struktur (12) umfasst, wobei die mindestens zwei Betätigungselemente auf der starren Struktur (12) fixiert sind.

11. Einheit nach einem der Ansprüche 1 bis 10, die dazu ausgestaltet ist, an Raumfahrzeugen mit einer Schubkraft zwischen 0,001 N und 500 N verwendet zu werden.

12. Rakete, umfassend eine Einheit nach einem der vorhergehenden Ansprüche.

## Claims

1. An assembly for spacecraft comprising:
- a support (10) configured to be fixed onto a spacecraft,
- a thruster resting on the support (10),
- an orientation device (40) comprising at least one actuator (44) able to modify the orientation of the thruster, **characterized in that** the actuator (44) comprises at least two electrodes (44b) and at least one electroactive polymer (44a) arranged between the at least two electrodes (44b).

2. The assembly according to claim 1, wherein the thruster is of chemical type comprising:
- a combustion chamber (20) carried by the support (10),
- a divergent (30) fixed to the combustion chamber (20) downstream of the combustion chamber (20).

3. The assembly according to claim 1, wherein the thruster is of electrical type.

4. The assembly according to claim 1 or 2, wherein the orientation device (40) comprises at least two actuators (44) inserted between the support (10) and the thruster.

5. The assembly according to any of claims 1 to 4, wherein the actuators are electrically powered independently of each other.

6. The assembly according to any of claims 1 to 5, wherein the orientation device (40) comprises four actuators (41, 42, 43, 44).

7. The assembly according to any of claims 1 to 6, wherein the orientation device (400) comprises an orientation arm (450), the actuator (410) being fixed onto a rigid structure (12) and being configured to modify the orientation of the thruster via the orientation arm (450).

8. The assembly according to claim 7, wherein the orientation arm is a first orientation arm (451), the orientation device (400) comprising a second orientation arm (452), the first and the second orientation arms being hinged to each other, the actuator (400) being configured to modify the orientation of the thruster via the first and second orientation arms.

9. The assembly according to claim 7 or 8, wherein the orientation device (400) comprises at least two actuators (410, 420) in series on the rigid structure (12), one of the actuators being fixed onto the rigid structure (12).

10. The assembly according to claim 7 or 8, wherein the orientation device comprises at least two actuators (410, 420) in parallel on the rigid structure (12), the at least two actuators being fixed onto the rigid structure (12).

11. The assembly according to any of claims 1 to 10, configured to be used on spacecraft having a thrust of between 0.001 N and 500 N.

12. A rocket comprising an assembly according to any one of the preceding claims.
